Europäisches Patentamt

**European Patent Office** (11) Publication number: **0 027 912**
**A1**

Office européen des brevets

## (12) EUROPEAN PATENT APPLICATION

(21) Application number: **80105916.3**

(22) Date of filing: **30.09.80**

(51) Int. Cl.³: **B 01 F 3/04**
// B01F7/24, C02F3/14,
C12M1/04

(30) Priority: **02.10.79 US 81044**

(43) Date of publication of application: **06.05.81**
**Bulletin 81/18**

(84) Designated Contracting States: **DE FR GB IT**

(71) Applicant: **UNION CARBIDE CORPORATION, 270, Park Avenue, New York, N.Y. 10017 (US)**

(72) Inventor: **Albertsson, Jon Gudmann, 85 Fernwood Lane, Grand Island (14072) (IS)**
Inventor: **Scaccia, Carl, R.D. Nr. 5, Rauber Hill Wellsville (14895) N.Y. (US)**

(74) Representative: **Schwan, Gerhard, Dipl.-Ing,, Elfenstrasse 32, D-8000 München 83 (DE)**

(54) **Apparatus for contacting liquid with a gas.**

(57) Apparatus for contacting a liquid, in a tank (10) containing a body of same, with a gas. A generally tubular draft member (21) containing an axial down-pumping helical screw impeller (32) is oriented in the tank with its central axis aligned vertically. Means (29, 35, 38) are provided for introducing gas into liquid flowing downwardly to the helical screw impeller to form a two-phase gas-liquid mixture which is pumped through the draft member (21) by the impeller (32) to induce circulation of liquid discharged from the draft member liquid outlet through the body of liquid in the tank to the draft member inlet, thereby effecting gas-liquid contacting.

## BACKGROUND OF THE INVENTION

### Field of the Invention

**TITLE**
**see front page**

This invention relates to apparatus for contacting liquid, in a tank containing a body of same, with a gas.

### Description of the Prior Art

In the field of gas-liquid contacting, as for example applied to the treatment of sewage by the activated sludge process, the prior art has employed numerous types of aeration devices, such as submerged porous diffusers, submerged turbines and surface aerators.

One such type of aeration device proposed by the prior art involves downward pumping of liquid through a draft tube disposed in a tank of liquid to be treated, by means of axial down-pumping impellers, with aspiration into or entrainment of gas by the down-pumped liquid. The impellers generally considered to be useful for such apparatus systems include marine-type propellers and pitched-blade turbines. It has been found, however, that impellers of such type have serious operational deficiencies in practice.

The problem with the aforementioned axial flow impellers is that they do not provide enough downpumping force to overcome gas bubble buoyancy at high gassing rates. At high gassing rates, generally associated with high power inputs and high rotational speeds for the impeller, the density of the gas-liquid mixture pumped by the impeller decreases. Such decrease in density substantially reduces the depth to which the two-phase gas-liquid mixture can be pumped by such devices. As a result, a significant quantity of the pumped gas tends to rise inside the draft tube and is recirculated by the impeller. This action not only reduces the quantity of the fresh gas that can subsequently be handled by the device, but, in the extreme, also imposes a self-limiting flooded condition at a relatively low gassing rate for such devices. In the flooded condition, the axial pumping impeller is effectively surrounded by an envelope of gas and is unable to provide any liquid pumping.

Accordingly, it is an object of the present invention to provide a draft tube-type apparatus employing an axial pumping impeller which avoids the aforementioned difficulties.

Other objects and advantages of the present invention will become apparent from the ensuing disclosure and appended claims.

## SUMMARY OF THE INVENTION

This invention relates to apparatus for contacting a liquid, in a tank containing a body of same, with a gas.

The apparatus comprises a generally tubular draft member oriented with its central axis aligned vertically and positioned in the tank with its upper end proximate to but beneath normal liquid level in the tank to form a submerged liquid inlet, and with its lower end vertically spaced from the bottom of the tank to form a submerged liquid outlet.

A rotatable axial down-pumping helical screw

3

impeller is positioned in the draft member between the inlet and the outlet thereof, the diameter of the impeller being smaller than but closely proximate to the diameter of the draft member. Means are provided for rotating the impeller.

Means are also provided for introducing gas into liquid flowing downwardly to the impeller to form a two-phase gas-liquid mixture, whereby the impeller axially downwardly pumps the two-phase gas-liquid mixture through the draft member and induces circulation of liquid discharged from the draft member liquid outlet through the body of liquid in the tank to the draft member liquid inlet, thereby affecting gas-liquid contacting in the tank.

As used herein, the term "normal liquid level in the tank" means the liquid level in the tank when the gas-liquid contacting apparatus is not in operation.

### BRIEF DESCRIPTION OF THE DRAWINGS

Figure 1 is a sectional, elevational view of an apparatus for contacting liquid with a gas according to one embodiment of the present invention.

Figure 2 is a sectional, elevational view of a gas-liquid contacting apparatus according to another embodiment of the invention.

Figure 3 is an elevational view of an axial down-pumping helical screw impeller comprising a single cycle helix blade configuration.

Figure 4 is an elevational view of a helical screw impeller comprising a single cycle double helix blade configuration.

Figure 5 is an elevational view of a helical

4

screw impeller comprising a double cycle helix
blade configuration.

Figure 6 is a sectional, elevational view of
a gas-liquid contacting system according to another embodiment of the invention.

Figure 7 is a sectional, elevational view of a
gas-liquid contacting system according to still another
embodiment of the invention.

## DESCRIPTION OF THE PREFERRED EMBODIMENTS

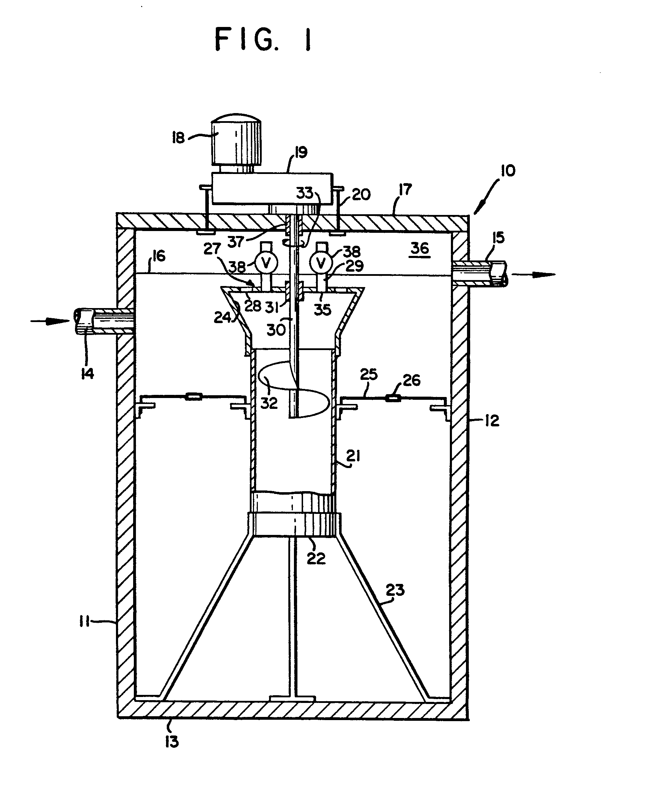

Referring now to the drawings, Figure 1 shows
a sectional, elevational view of an apparatus for contacting
a liquid, in tank 10 containing a body of the liquid to be
contacted, with a gas. The contacting tank 10 comprises
side walls 11 and 12 and bottom floor 13. The tank is
filled with the liquid to be contacted to a level 16 via
inlet conduit 14. Contacted liquid is withdrawn from the
tank through conduit 15. Across the top of the tank is a
bridge 17 upon which the motor 18 and gear reduction unit
19 are supported. The motor and gear reduction unit are
fixed to the bridge 17 through fasteners 20. Shaft member
30 is connected to the gear reduction unit 19 through
bushing 37 in bridge 17. At the lower end of the shaft
member 30, an impeller 32 is connected. Impeller 32 is a
rotatable axial down-pumping helical screw impeller. In
order to provide a suitable level of liquid pumping action
in the system of the present invention, the impeller preferably comprises blade elements characterized by a pitch to
diameter ratio of from 0.25 to 0.90, and most preferably
from 0.5 to 0.80.

Impeller 32 is positioned in a draft member 21 of generally tubular configuration. The draft member is oriented in the tank with its central axis aligned vertically and with its upper end proximate to but beneath normal liquid level in the tank to form a submerged liquid inlet, and with its lower end vertically spaced from the bottom of the tank to form a submerged liquid outlet. The draft member is supported in the tank by means of support struts 23 and collar 22 at its lower end and by means of side support members 25 at its intermediate portion. The tension on the side support means can be adjusted by adjustment means 26. As shown, the axial down-pumping helical screw impeller is positioned in the draft member between the inlet and the outlet thereof, the diameter of the impeller being smaller than but closely proximate to the diameter of the draft member.

Disposed at the upper end of the draft member 21 is an outwardly flared conical inlet section 24, the upper end of which is positioned just below the liquid level 16. Attached to the top of the inlet section of the draft member is a liquid flow restriction means 27. Such liquid flow restriction means is constituted by a horizontal plate fitted over the top of the inlet. The horizontal plate is provided with a plurality of gas inlet holes 35 through which gas conduits 29 extend. The gas conduits are vertically aligned with their upper ends located in a gas space 36 overlying the liquid in the tank; the lower ends of the gas conduits terminate at the underside of the horizontal plate covering the inlet section of the draft member. The upper ends of the gas conduits 29 are provided with valves 38 for controlling the flow rate of gas therethrough. The horizontal plate liquid flow restriction

6

member is also provided with a plurality of liquid flow passages 28 for ingress of liquid into the draft member from the surrounding bulk·volume of liquid in the tank. A bushing 31 is provided in the horizontal plate for the shaft member 30. The liquid flow passages 28 are in the form of large openings which offer low resistance to liquid flow; preferably, the total area provided by the liquid flow passages in the·horizontal plate is between about 70 and 100% of the cross-sectional area of the main cylindrical body portion of the draft member 21.

In operation, the draft member 30 is rotated in the direction shown by arrow 33 by means of motor 18 and gear reduction unit 19 at a relatively high rate of speed, preferably at least 150 rpm. As a result, the impeller pumps liquid downwardly through the draft member 21. Liquid flows into the draft member 21 through the plurality of liquid flow openings 28. By rotating the impeller at suitable speed, the flow of liquid through the liquid flow passages 28 induces a flow of gas through the gas conduits 29 by aspiration, so that gas is entrained into the downwardly flowing liquid. In such manner, the impeller axially downwardly pumps the two-phase gas-liquid mixture downwardly through the draft member and induces circulation of liquid discharged from the draft member liquid outlet through the body of liquid in the tank to the draft member liquid inlet, thereby effecting gas-liquid contacting in the tank.

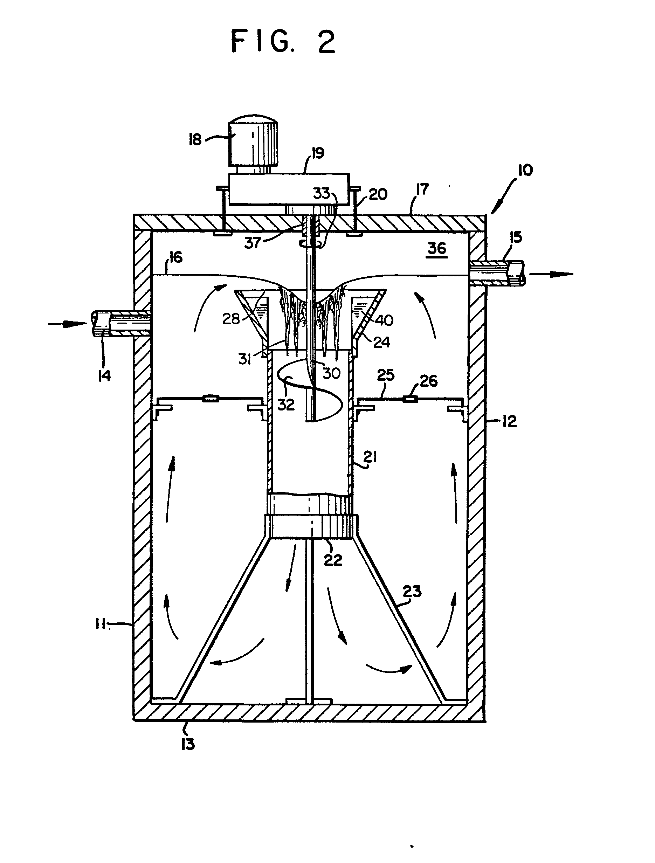

Figure 2 is a sectional, elevational view of·a gas-liquid contacting apparatus according to another embodiment of the invention. Apparatus elements corresponding to those previously discussed in connection with the Figure 1 embodiment are numbered correspondingly with respect to Figure 1.

In operation of the Figure 2 apparatus, the shaft member 30 is rotated in the direction shown by arrow 33, by means of motor 18 and gear reduction unit 19 so as to pump liquid downwardly through the draft member 21. In this embodiment, rotation of the impeller 32 at sufficient rotational speed induces formation of a vortex-shaped depression 28 at the liquid-gas interface in the conical inlet section 24. This liquid vortex extends from the normal liquid surface down into the conical inlet section, in turn inducing the formation of a plurality of gas vorticies 31 extending downwardly in the liquid toward the impeller 32. Liquid flowing into the draft member toward the impeller thus entrains gas bubbles from the gas vorticies 31 to form a two-phase gas-liquid mixture which is pumped downwardly through the draft member by the impeller. To insure that a gross circular rotation of fluid within the inlet section of the draft member is not caused by rotation of the impeller 32, inlet guide baffles 40 are provided in the inlet section 24. Typically, two to four such baffles are provided symmetrically spaced around the inlet section as shown. For maximum effectiveness each baffle is set in a radial plane.

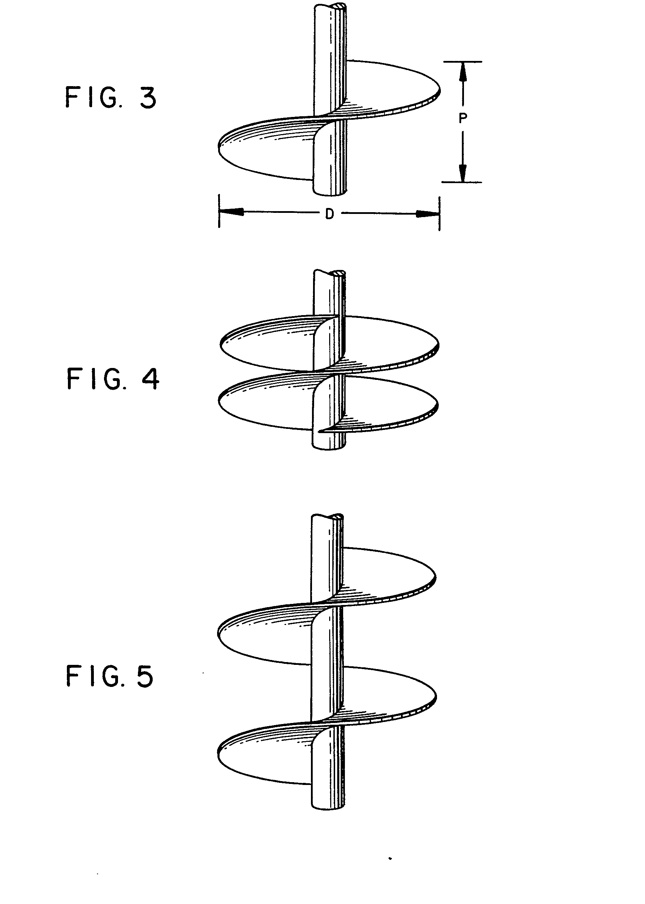

Figures 3 - 5 show the various axial down-pumping helical screw impellers which may advantageously be employed in the practice of the present invention. The Figure 3 axial down-pumping helical screw impeller comprises a single cycle helix blade configuration of pitch P and a diameter D. The screw impeller shown in Figure 4 comprises a single cycle, double helix blade configuration, and the screw impeller of Figure 5 comprises a two-cycle helix blade configuration.

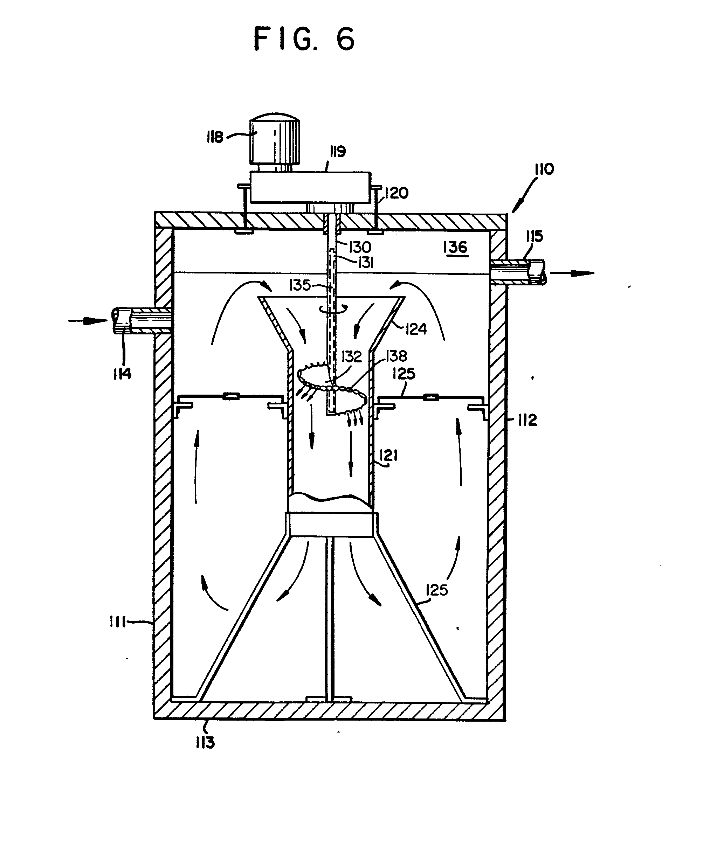

Figure 6 shows a sectional, elevational view of a gas-liquid contacting apparatus according to another embodiment of the invention. System elements corresponding to those of the Figure 1 embodiment are numbered correspondingly with respect to Figure 1 by addition of 100 to the reference numerals of the Figure 1 elements.

In the Figure 6 embodiment, the means for rotating impeller 132 comprise a rotatable, vertically aligned shaft 130 extending downwardly into the draft member and having the impeller 132 disposed at its lower end. The impeller comprises blade elements having slot openings 138 on their edge surfaces communicating with interior gas passages in the blade elements. The rotatable shaft 130 has a central passageway 135 therein communicating at its upper end 131 with a source of gas in the form of a body of same overlying the liquid in the tank. Shaft interior passage 135 communicates at its lower end with the aforementioned interior gas passages in the blade elements, whereby gas is aspirated during rotation of the shaft and impeller through the shaft interior passage and the blade element interior gas passages for discharge through the blade element slot openings 138 into the liquid downwardly pumped by the impeller.

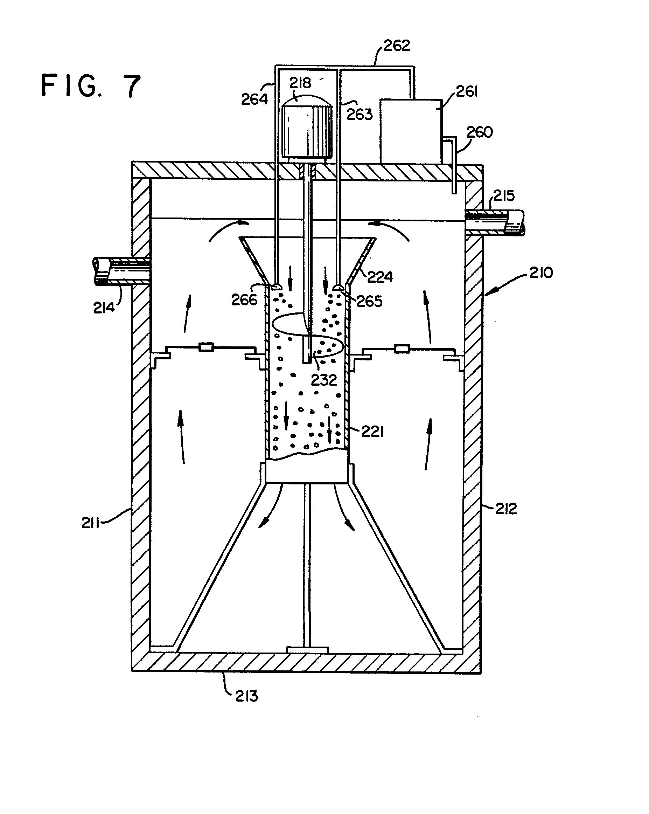

Figure 7 is a sectional, elevational view of a gas-liquid contacting apparatus according to still another embodiment of the invention. System elements in Figure 7 are numbered correspondingly with respect to those in Figure 1 by addition of 200 to the reference numerals of the corresponding system elements of Figure 1.

In the Figure 7 embodiment, means are provided for introducing gas into liquid in the draft member, above the axial down-pumping helical screw impeller 232, comprising porous diffusers 265 and 266. These porous diffusers are supplied with gas by means of gas feed conduits 263 and 264 joined to manifold conduit 262 from gas compressor 261. In operation, compressor 261 draws gas from the gas head space of the contacting tank 210 via line 260, with compressed gas from the compressor flowing into manifold conduit 262 and from thence via feed conduits 263 and 264 to the porous diffusers 265 and 266, respectively, for injection of gas into the liquid flowing downwardly to the impeller 232.

Although preferred embodiments of the invention have been described in detail, it will be appreciated that other modifications are contemplated within the scope of the invention.

*10*

WHAT IS CLAIMED IS:

1.   Apparatus for contacting a liquid, in a
tank containing a body of same, with a gas, comprising:

(a)   a generally tubular draft member
oriented with its central axis aligned vertically and
positioned in said tank with its upper end proximate to
but beneath normal liquid level in said tank to form a
submerged liquid inlet, and with its lower end vertically
spaced from the bottom of said tank to form a submerged
liquid outlet;

(b) a rotatable axial down-pumping helical
screw impeller positioned in said draft member between
said inlet and said outlet thereof, the diameter of said
impeller being smaller than but closely proximate to
the diameter of said draft member;

(c) means for rotating said impeller; and

(d) means for introducing gas into liquid
flowing downwardly to said impeller, whereby said impeller
axially downwardly pumps said two-phase gas-liquid mixture
downwardly through said draft member and induces circulation of liquid discharged from said draft member liquid
outlet through said body of liquid in said tank to said
draft member liquid inlet, thereby effecting gas-liquid
contacting in said tank.

2.   Apparatus according to claim 1 wherein said
axial down-pumping helical screw impeller comprises a
single cycle helix blade configuration.

3.   Apparatus according to claim 1 wherein said
axial down-pumping helical screw impeller comprises a two-cycle helix blade configuration.

4. Apparatus according to claim 1 wherein said axial down-pumping helical screw impeller comprises a single cycle, double helix blade configuration.

5. Apparatus according to claim 1 wherein said means for rotating said impeller effect rotation of at least 150 rpm.

6. Apparatus according to claim 1 wherein said means for introducing gas into liquid comprise gas flow passage means having an inlet exposed to a source of gas and an outlet positioned proximate to said draft member submerged liquid inlet and proximately above said axial down-pumping helical screw impeller.

7. Apparatus according to claim 1 wherein said means for introducing gas into liquid comprise a porous diffuser disposed proximate to and above said impeller, arranged to inject gas into liquid flowing downwardly to said impeller.

8. Apparatus according to claim 1 wherein said means for rotating said impeller comprise a rotatable, vertically aligned shaft extending downwardly into said draft member and having said impeller disposed at its lower end, said impeller comprising blade elements having slot openings on their edge surfaces communicating with interior gas passages in said blade elements, and said rotatable shaft having a central passageway therein communicating at its upper end with a source of gas in the form of a body of same overlying said liquid in said tank, with said shaft interior passage communicating at its lower end with said interior gas passages in said blade elements, whereby gas is aspirated during rotation of said shaft and impeller through said shaft interior passage and said blade element interior gas passages for discharge into the liquid downwardly pumped by said impeller, through said blade element slot openings.

9. Apparatus according to claim 1 wherein said axial down-pumping helical screw impeller comprises blade elements characterized by a pitch to diameter ratio of from 0.25 to 0.90.

10. Apparatus according to claim 1 wherein said down-pumping helical screw impeller comprises blade elements characterized by a pitch to diameter ratio of from 0.5 to 0.80.

1/5

FIG. 1

# FIG. 2

FIG. 3

FIG. 4

FIG. 5

# FIG. 6

FIG. 7

**European Patent Office**

## EUROPEAN SEARCH REPORT

Application number

EP 80 10 5916.3

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 450 612 (AIRCO) <br> * fig. 1 * <br> --- | 1 | B 01 F 3/04 <br> //B 01 F 7/24 <br> C 02 F 3/14 <br> C 12 M 1/04 |
| | GB - A - 1 495 902 (AIRCO) <br> * fig. 1 * <br> --- | 1 | |
| | DE - B - 2 045 603 (PROCEDES SEM) <br> * fig. 1 to 3 * <br> --- | 1,6,7 | |
| | DE - A - 2 303 396 (LINDE) <br> * fig. 1 to 3 * <br> --- | 1,6,7 | **TECHNICAL FIELDS SEARCHED (Int. Cl.³)** |
| | DE - A - 2 306 303 (LION FAT & OIL) <br> * fig. * <br> --- | 7 | B 01 F 3/04 <br> B 01 F 7/24 <br> B 01 F 13/02 |
| | DE - A1 - 2 461 032 (ALFA-LAVAL) <br> * fig. 1, 3 to 8, 11 * <br> --- | 3,4,8 | C 02 F 3/02 <br> C 02 F 3/14 <br> C 02 F 3/16 |
| | DE - A1 - 2 835 914 (ALFA-LAVAL STALL-TECHNIK) <br> * fig. 2 * <br> --- | 3,4,8 | C 02 F 7/00 <br> C 12 M 1/04 <br> C 12 M 1/06 |
| | AT - B - 327 830 (ALFA-LAVAL STALL-TECHNIK) <br> * fig. * <br> --- | 1,8 | **CATEGORY OF CITED DOCUMENTS** <br> X: particularly relevant <br> A: technological background <br> O: non-written disclosure <br> P: intermediate document |
| | CH - A - 509 943 (J.R. KAELIN) <br> * fig. 1, 2 * <br> --- | 1 | T: theory or principle underlying the invention <br> E: conflicting application <br> D: document cited in the application |
| P | DD - A - 139 524 (F. LIEPE et al.) <br> * example; fig. * <br> --- ./.. | 1,3,6 | L: citation for other reasons |

&: member of the same patent family, corresponding document

| | The present search report has been drawn up for all claims | |
|---|---|---|
| Place of search <br> Berlin | Date of completion of the search <br> 23-01-1981 | Examiner <br> KÜHN |

EPO Form 1503.1 06.78

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | US - A - 4 145 383 (HOWARD MACHINERY)<br>* fig. 2 *<br>-- | | |
| A | GB - A - 1 435 690 (HOWARD HARVESTORE)<br>* fig. 2 *<br>-- | | |
| A | DE - A - 1 517 647 (DIDIER-WERKE)<br>* fig. *<br>-- | | |
| A | DE - A1 - 2 507 698 (LINDE)<br>* fig. *<br>-- | | TECHNICAL FIELDS SEARCHED (Int. Cl.3) |
| A | DE - A1 - 2 649 756 (J.R. KAELIN)<br>* fig. 1 *<br>-- | | |
| A | DE - A1 - 2 823 923 (RANKS HOVIS McDOUGALL)<br>* fig. 2, 3 *<br>-- | | |
| A | DE - U - 7 222 305 (F. HAHNEWALD)<br>* fig. *<br>-- | | |
| A | CH - A - 564 368 (H. MÜLLER)<br>* fig. *<br>-- | | |
| | FR - A1 - 2 249 703 (CONSTRUCTIONS ELECTRIQUES ET MECANIQUES ALSTHOM)<br>* fig. 1, 2 *<br>---- | | |